# FASCICULE DE BREVET EUROPEEN

(11) **EP 4 017 015 B1**
(45) Date de publication et mention de la délivrance du brevet: **16.08.2023**
(21) Numéro de dépôt: 21214886.0
(22) Date de dépôt: 15.12.2021
(51) Int. Cl.: H04N 21/436, H04N 21/4363

(54) **PROCÉDÉ ET DISPOSITIF DE GESTION DU MODE DE FONCTIONNEMENT D'UN DISPOSITIF COMPRENANT DES MOYENS DE TRANSFERT D'UNE SOURCE AUDIOVISUELLE ET DES MOYENS DE RESTITUTION D'UN SIGNAL AUDIO DANS UN SYSTÈME AUDIOVISUEL**
VERFAHREN UND VORRICHTUNG ZUR VERWALTUNG DES BETRIEBSMODUS EINER VORRICHTUNG MIT MITTELN ZUR ÜBERTRAGUNG EINER AUDIOVISUELLEN QUELLE UND MITTELN ZUR WIEDERGABE EINES AUDIOSIGNALS IN EINEM AUDIOVISUELLEN SYSTEM
METHOD AND DEVICE FOR MANAGING THE OPERATING MODE OF A DEVICE COMPRISING MEANS FOR TRANSFERRING AN AUDIOVISUAL SOURCE AND MEANS FOR PLAYING BACK AN AUDIO SIGNAL IN AN AUDIOVISUAL SYSTEM

(30) Priorité: 18.12.2020 FR 2013692
(43) Date de publication de la demande: 22.06.2022
(73) Titulaire: SAGEMCOM BROADBAND SAS, 92500 Rueil-Malmaison (FR)
(72) Inventeur: DELPLACE, Stéphane, 92500 RUEIL MALMAISON (FR); INDIVERI, Piero, 92500 RUEIL MALMAISON (FR)
(74) Mandataire: Cabinet Le Guen Maillet

(56) Documents cités:
- JP-A- 2013 081 134
- US-A1- 2015 134 860
- US-A1- 2017 195 722
- Hdmi Forum: "High-Definition Multimedia Interface Specification Version 2.0", , 4 septembre 2013 (2013-09-04), XP055388172, Extrait de l'Internet: URL:hdmiforum.org [extrait le 2017-07-05]
- HDMI: "High-Definition Multimedia Interface. Specification Version 1.4", INTERNET CITATION, 23 mars 2010 (2010-03-23), page 425pp, XP009133650, Extrait de l'Internet: URL:http://wenku.baidu.com/view/e7db77d184 254b35eefd34d0.html [extrait le 2010-06-16]

## Description

### DOMAINE TECHNIQUE

La présente invention est dans le domaine de l'audiovisuel et plus particulièrement dans la gestion du mode de fonctionnement d'un dispositif comprenant des moyens de transfert d'une source audiovisuelle et des moyens de restitution d'un signal audio.

### ETAT DE LA TECHNIQUE ANTERIEURE

Les systèmes audiovisuels domestiques actuels utilisent des connexions par exemple conformes à la spécification HDMI (High Définition Multimedia Interface en anglais) ou interface multimédia haute définition pour relier les différents dispositifs multimédias à un téléviseur.

Les dispositifs multimédias sont par exemple des sources audio/vidéo telles que des lecteurs Blu-ray, des boîtiers décodeurs de télévision numérique (Set-Top Box en anglais), des consoles de jeux vidéo, des amplificateurs audios, des enceintes acoustiques...

Les dispositifs multimédias se comportent vis-à-vis d'un téléviseur comme une source audiovisuelle ou comme une destination d'un signal audio.

La spécification HDMI à partir de la version 2.0 permet de déclarer un dispositif multimédia à la fois comme une source audiovisuelle et une destination de contenu audio.

Ces dispositifs comprennent ainsi des moyens de transfert d'une source audiovisuelle et des moyens de restitution d'un signal audio qui peuvent à la fois être source d'un signal audiovisuel et restituer un signal audio.

Les spécification HDMI antérieures à la version 2.0 ne permettent pas de déclarer un dispositif multimédia à la fois comme une source audiovisuelle et une destination de contenu audio.

Dans un système multimédia comprenant un téléviseur conforme à une spécification HDMI antérieure à la version 2.0, voire pour certains téléviseurs indiquant une implémentation de la spécification HDMI version 2.0 mais n'étant en réalité pas pleinement conformes à cette spécification, les dispositifs comprenant des moyens de transfert d'une source audiovisuelle et des moyens de restitution d'un signal audio ne peuvent pas offrir toutes les fonctionnalités qu'ils peuvent apporter à l'usager du système audiovisuel. Ceci est pénalisant pour l'usager du système audiovisuel.

Les spécifications « High définition Multimedia Interface Spécification version 2.0 et 1.4 » spécifient respectivement le fonctionnement HDMI 2.0 et 1.4.

### EXPOSE DE L'INVENTION

A cette fin, selon un premier aspect, l'invention propose un procédé de gestion du mode de fonctionnement d'un dispositif comprenant des moyens de transfert d'une source audiovisuelle et des moyens de restitution d'un signal audio tel que défini dans la revendication 1.

L'invention concerne aussi un dispositif de gestion du mode de fonctionnement d'un dispositif comprenant des moyens de transfert d'une source audiovisuelle et des moyens de restitution d'un signal audio tel que défini dans la revendication 5.

Ainsi la présente invention permet d'offrir à un utilisateur chacun des modes de fonctionnement du dispositif comprenant des moyens de transfert d'une source audiovisuelle et des moyens de restitution d'un signal audio et de ne pas pénaliser un usager du système audiovisuel disposant d'un téléviseur non conforme à la spécification HDMI 2.0.

Selon un mode particulier, l'attribution d'une adresse logique à la place d'une adresse logique à la place d'une autre adresse logique est effectuée à la réception d'un message prédéterminé par la connexion HDMI. Selon un mode particulier, l'attribution de l'adresse logique système audio à la place de l'adresse source audiovisuelle est effectuée uniquement si aucun autre dispositif restitution audio n'est détecté.

Selon un mode particulier, lorsque le dispositif comprenant les moyens de transfert d'une source audiovisuelle et les moyens de restitution d'un signal audio est dans le mode en source audiovisuelle, le dispositif comprenant les moyens de transfert d'une source audiovisuelle et les moyens de restitution d'un signal audio transfère uniquement la partie vidéo du signal audiovisuel sur la connexion HDMI et restitue par les moyens de restitution d'un signal audio la composante audio décodée du signal audiovisuel.

La présente invention concerne aussi un produit programme d'ordinateur. Il comprend des instructions pour implémenter, par un dispositif noeud, le procédé selon l'un des modes de réalisation précédents, lorsque ledit programme est exécuté par un processeur du dispositif noeud.

La présente invention concerne aussi un support de stockage. Il stocke un programme d'ordinateur comprenant des instructions pour implémenter, par un dispositif noeud, le procédé selon l'un des modes de réalisation précédents, lorsque ledit programme est exécuté par un processeur du dispositif noeud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

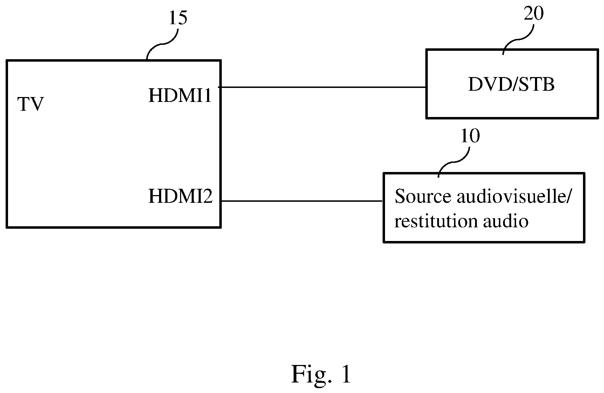

[Fig. 1] illustre schématiquement un système audiovisuel dans lequel la présente invention est implémentée ;

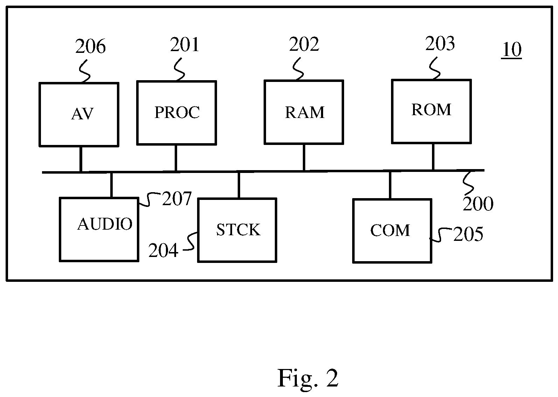

[Fig. 2] illustre schématiquement un exemple d'architecture matérielle d'un dispositif comprenant des moyens de transfert d'une source audiovisuelle et des moyens de restitution d'un signal audio ;

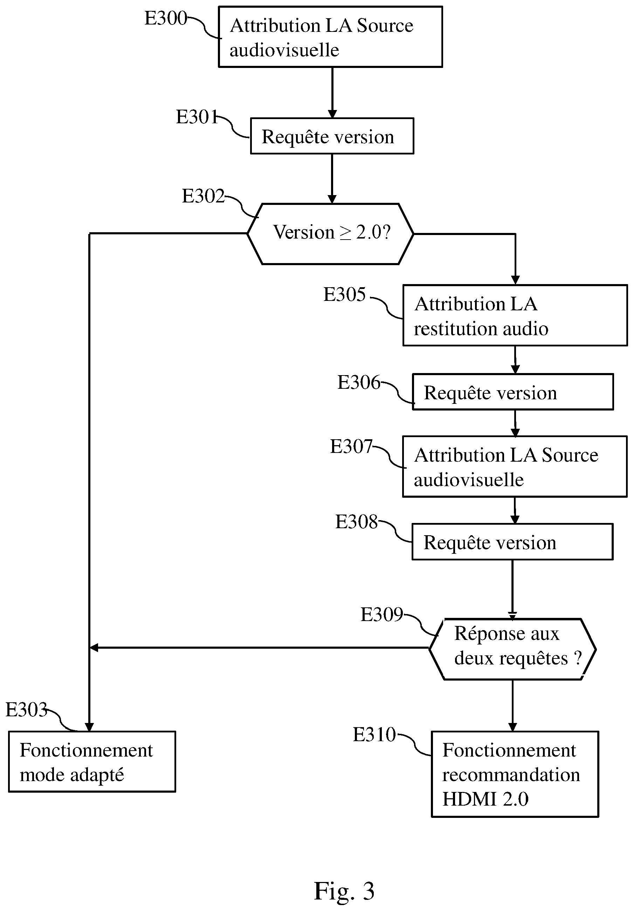

[Fig. 3] illustre schématiquement un procédé de gestion du mode de fonctionnement d'un dispositif comprenant des moyens de transfert d'une source audiovisuelle et des moyens de restitution d'un signal audio dans un système audiovisuel comprenant un téléviseur adapté ou non à gérer un dispositif comprenant des moyens de transfert d'une source audiovisuelle et des moyens de restitution d'un signal audio ;

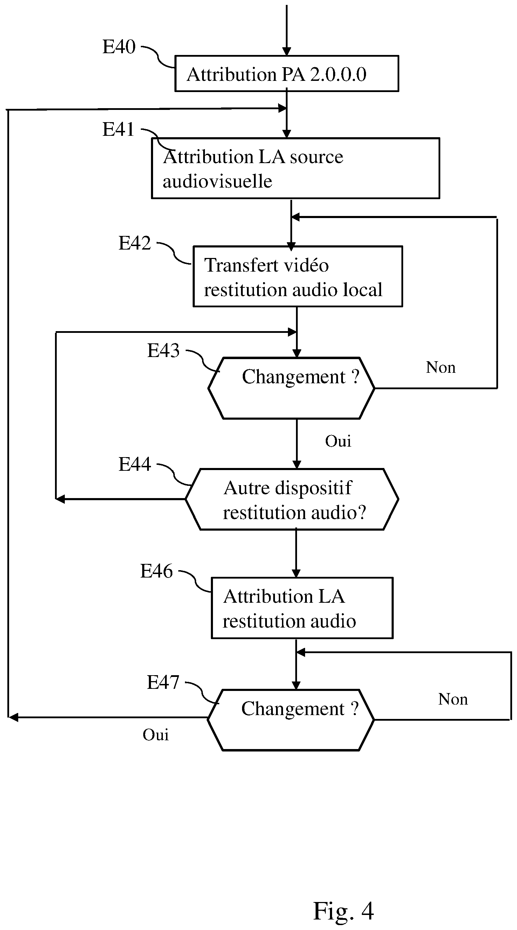

[Fig. 4] illustre schématiquement un premier exemple de réalisation du procédé de gestion du mode de fonctionnement d'un dispositif comprenant des moyens de transfert d'une source audiovisuelle et des moyens de restitution d'un signal audio dans un système audiovisuel comprenant un téléviseur non adapté à gérer un dispositif comprenant des moyens de transfert d'une source audiovisuelle et des moyens de restitution d'un signal audio ;

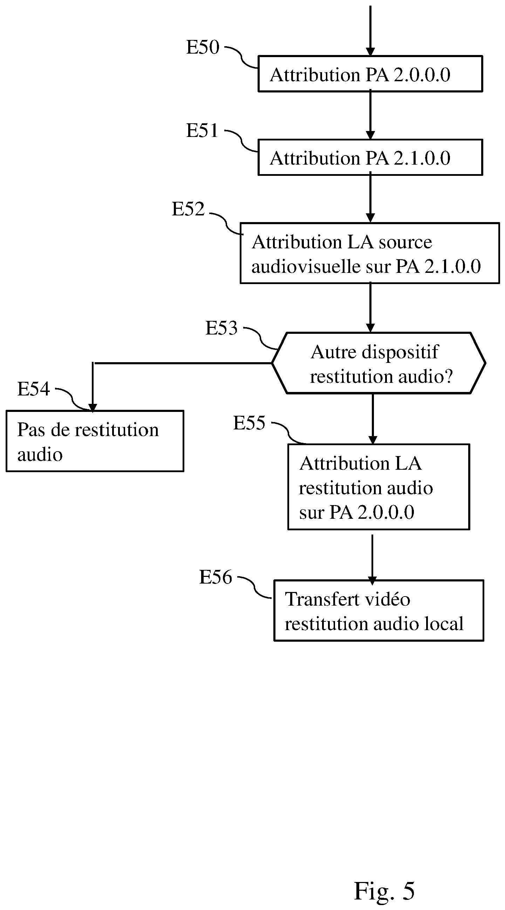

[Fig. 5] illustre schématiquement un second exemple de réalisation du procédé de gestion du mode de fonctionnement d'un dispositif comprenant des moyens de transfert d'une source audiovisuelle et des moyens de restitution d'un signal audio dans un système audiovisuel comprenant un téléviseur non adapté à gérer un dispositif comprenant des moyens de transfert d'une source audiovisuelle et des moyens de restitution d'un signal audio.

### EXPOSE DETAILLE DE MODES DE REALISATION

La Fig. 1 illustre schématiquement un système audiovisuel dans lequel la présente invention est implémentée.

Dans l'exemple de la Fig. 1, un téléviseur 15 est relié à une source audiovisuelle 20 et à un dispositif 10 comprenant des moyens de transfert d'une source audiovisuelle et des moyens de restitution d'un signal audio par l'intermédiaire de connexions HDMI.

La source audiovisuelle 20 est par exemple un lecteur Blu-ray, un boîtier décodeur de télévision numérique, ou une console de jeux vidéo. La source audiovisuelle est reliée au téléviseur 15 par un câble HDMI branché sur le port HDMI 1 du téléviseur 15.

Les moyens de transfert d'une source audiovisuelle du dispositif 10 sont par exemple un lecteur Blu-ray ou un boîtier décodeur de télévision numérique ou une console de jeux vidéo et les moyens de restitution d'un signal audio sont un amplificateur et au moins une enceinte acoustique. Le dispositif est relié au téléviseur 15 par un câble HDMI branché sur le port HDMI 2 du téléviseur 15.

Par soucis de simplification, seuls deux dispositifs multimédias et deux ports HDMI sont représentés en Fig. 1. Bien entendu, le téléviseur 15 comporte un nombre plus important de ports HDMI où d'autres dispositifs multimédias peuvent être connectés.

A partir de la spécification HDMI 2.0, un dispositif multimédia peut se déclarer à la fois comme une source audiovisuelle et une destination de contenu audio.

Par exemple, le téléviseur 15 attribue à la source audiovisuelle 20 connectée sur le port HDMI 1 l'adresse physique 1.0.0.0 et attribue au dispositif 10 comprenant des moyens de transfert d'une source audiovisuelle et des moyens de restitution d'un signal audio connecté sur le port HDMI 2 l'adresse physique 2.0.0.0.

La source audiovisuelle 20 recherche dans une liste d'adresses logiques la première adresse logique correspondant à son type. La source audiovisuelle 20 s'attribue une adresse logique système de lecture (playback system en anglais) comme décrit aux points 11.3.2 et 11.3. 3 de la spécification HDMI 2.0, par exemple l'adresse logique PLAYBACK1.

Le dispositif 10 comprenant des moyens de transfert d'une source audiovisuelle et des moyens de restitution d'un signal audio recherche dans une liste d'adresses logiques la première adresse logique correspondant à chacun de ses types. Le dispositif 10 comprenant des moyens de transfert d'une source audiovisuelle et des moyens de restitution d'un signal audio s'attribue la première adresse logique système de lecture disponible, par exemple l'adresse logique PLAYBACK2 et si l'adresse logique système audio AUDIOSYSTEM est disponible il se l'attribue, comme décrit aux points 11.3.2 et 11.3. 3 de la spécification HDMI2.0.

Dans un système audiovisuel classique, lorsqu'un téléviseur n'est pas conforme à une spécification HDMI antérieure à la version 2.0 ou qu'il n'implémente pas la totalité des fonctionnalités de la spécification HDMI version 2.0, un dispositif comprenant des moyens de transfert d'une source audiovisuelle et des moyens de restitution d'un signal audio ne peut pas s'attribuer simultanément une adresse logique PLAYBACK et une adresse logique AUDIOSYSTEM.

La Fig. 2 illustre schématiquement un exemple d'architecture matérielle d'un dispositif comprenant des moyens de transfert d'une source audiovisuelle et des moyens de restitution d'un signal audio.

Selon l'exemple d'architecture matérielle représenté à la Fig. 2, le dispositif 10 comprenant des moyens de transfert d'une source audiovisuelle et des moyens de restitution d'un signal audio comprend, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; des moyens de restitution audio AUDIO 206 et une source audiovisuelle AV 206, au moins une interface de communication 505 permettant au dispositif 10 comprenant des moyens de transfert d'une source audiovisuelle et des moyens de restitution d'un signal audio de communiquer par l'intermédiaire d'au moins un port HDMI avec le téléviseur 15 ou d'autres dispositifs multimédias et de communiquer par l'intermédiaire d'un réseau étendu non représenté en Fig. 1 lorsque celui comprend un décodeur de télévision numérique.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif 10 comprenant des moyens de transfert d'une source audiovisuelle et des moyens de restitution d'un signal audio 0 est mis sous tension, le processeur 201 est capable de lire de la RAM 202 des instructions et de les exécuter. Ces instructions forment un programme d'ordinateur causant la mise en oeuvre, par le processeur 201, de tout ou partie du procédé décrit en relation avec les Figs. 3 et 4 ou 3 et 5.

Le procédé décrit ci-après en relation avec les Figs. 3 et 4 ou 3 et 5 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif comprend de la circuiterie électronique configurée pour mettre en oeuvre le procédé décrit en relation avec les Figs. 3 et 4 ou 3 et 5.

La Fig. 3 illustre schématiquement un procédé de gestion du mode de fonctionnement d'un dispositif comprenant des moyens de transfert d'une source audiovisuelle et des moyens de restitution d'un signal audio dans un système audiovisuel comprenant un téléviseur adapté ou non à gérer un dispositif comprenant des moyens de transfert d'une source audiovisuelle et des moyens de restitution d'un signal audio.

A l'étape E300, le dispositif 10 comprenant des moyens de transfert d'une source audiovisuelle et des moyens de restitution d'un signal audio s'attribue la première adresse logique système de lecture disponible, par exemple l'adresse logique PLAYBACK2.

A l'étape E301, le dispositif 10 comprenant des moyens de transfert d'une source audiovisuelle et des moyens de restitution d'un signal audio transfère à destination du téléviseur 15 un message de découverte de version. Ce message appelé « Get CEC Version » est conforme à la spécification HDMI de version au moins égale à la version 1.4b.

CEC est l'acronyme des termes anglais Consumer Electronic control, en français contrôle électronique grand public.

Le message de découverte de version comprend l'adresse logique PLAYBACK2.A l'étape E302, le dispositif 10 vérifie si le téléviseur 15 répond au message de requête de version ou répond au message en indiquant une version antérieure à la version 2.0.

Si le téléviseur 15 ne répond pas au message de requête de version ou répond au message en indiquant une version antérieure à la version 2.0, le dispositif 10 passe à l'étape E303. A l'étape E303, le dispositif 10 passe dans un mode de fonctionnement adapté qui sera décrit, selon un premier exemple de réalisation en référence à la Fig. 4 ou selon un second exemple de réalisation en référence à la Fig. 5.

Si le téléviseur 15 répond au message de requête en indiquant une version égale ou postérieure à la version 2.0, le dispositif 10 passe à l'étape E305.

A l'étape E305, le dispositif 10 comprenant des moyens de transfert d'une source audiovisuelle et des moyens de restitution d'un signal audio s'attribue si l'adresse logique système audio AUDIOSYSTEM est disponible, comme décrit aux points 11.3.2 et 11.3. 3 de la spécification HDMI 2.0.

Si l'adresse logique AUDIOSYSTEM n'est pas disponible, le dispositif 10 comprenant des moyens de transfert d'une source audiovisuelle et des moyens de restitution d'un signal audio interrompt le présent algorithme et :
- désactive la fonctionnalité système audio ou
- active les moyens de restitution d'un signal audio uniquement pour restituer la composante audio décodée d'un signal audiovisuel délivré par le dispositif ou
- commande la génération d'un message à destination de l'utilisateur notifiant celui-ci d'une impossibilité d'utiliser les moyens de restitution d'un signal audio.

A l'étape E306, le dispositif 10 transfère à destination du téléviseur 15 un message de découverte de version « Get CEC Version » en tant que système audio. Le message de découverte de version comprend l'adresse logique AUDIOSYSTEM.

A l'étape E307, le dispositif 10 comprenant des moyens de transfert d'une source audiovisuelle et des moyens de restitution d'un signal audio s'attribue la première adresse logique système de lecture disponible, par exemple l'adresse logique PLAYBACK2.

A l'étape E308, le dispositif 10 transfère à destination du téléviseur 15 un message de découverte de version < Get CEC Version > en tant que source audiovisuelle. Le message de découverte de version comprend l'adresse logique PLAYBACK2.

A l'étape E309, le dispositif 10 vérifie si le téléviseur 15 répond au message envoyé à l'étape E306 et au message envoyé à l'étape E308. Dans l'affirmative, le dispositif 10 passe à l'étape E310. Dans la négative, le dispositif 10 passe à l'étape E303.

A l'étape E310, le dispositif 10, sachant que le téléviseur est apte à fonctionner conformément à la spécification HDMI 2.0 entre dans un mode de fonctionnement classique conforme à la spécification HDMI version 2.0 ou plus.

La Fig. 4 illustre schématiquement un premier exemple de réalisation du procédé de gestion du mode de fonctionnement d'un dispositif comprenant des moyens de transfert d'une source audiovisuelle et des moyens de restitution d'un signal audio dans un système audiovisuel comprenant un téléviseur non adapté à gérer un dispositif comprenant des moyens de transfert d'une source audiovisuelle et des moyens de restitution d'un signal audio.

A l'étape E40, comme cela a été précédemment mentionné en référence à la Fig. 1, le téléviseur 15 attribue à la source audiovisuelle 20 connectée sur le port HDMI 1 l'adresse physique 1.0.0.0 et attribue au dispositif 10 comprenant des moyens de transfert d'une source audiovisuelle et des moyens de restitution d'un signal audio connecté sur le port HDMI 2 l'adresse physique 2.0.0.0.

A l'étape E41, le dispositif 10 comprenant des moyens de transfert d'une source audiovisuelle et des moyens de restitution d'un signal audio s'attribue la première adresse logique système de lecture disponible, par exemple l'adresse logique PLAYBACK2 à la place de l'adresse logique LA système audio AUDIOSYSTEM s'il se l'était précédemment attribuée.

A l'étape E42, le dispositif 10 transfère sur la liaison HDMI uniquement la partie vidéo du signal audiovisuel et restitue localement par les moyens de restitution d'un signal audio 207 la composante audio décodée du signal audiovisuel.

En effet, utiliser le chemin de retour audio (ARC) dans ce cas, induirait une latence inutile et surtout limiterait la source audio à des formats compatibles ARC alors que les moyens de restitution d'un signal audio 207 peuvent supporter des formats audios supérieurs.

A l'étape E43, le dispositif 10 vérifie s'il y a une commutation du mode source audiovisuelle vers le mode restitution audio. Une commutation du mode source audiovisuelle vers le mode restitution audio apparaît lorsque le port HDMI du dispositif 10 n'est plus le port HDMI utilisé comme source audiovisuelle de la TV 15. Cela peut par exemple se produire lorsque l'utilisateur sélectionne dans l'interface de la TV 15 un autre port HDMI que celui relié au dispositif 10, ou qu'un autre dispositif, tel que le dispositif 20, relié au téléviseur 15 est allumé, déclenchant sa sélection en tant que source audiovisuelle. Le téléviseur 15 envoie au périphérique relié à l'autre port HDMI un message CEC < Set Stream Path>, et ce dernier périphérique diffuse alors un message CEC de type < Active Source>. A la réception de ce message, le dispositif 10 détermine alors qu'il n'est plus source audiovisuelle. Dans l'affirmative, le dispositif 10 passe à l'étape E44. Dans la négative, le dispositif 10 retourne à l'étape E42.

A l'étape E44 le dispositif 10 comprenant des moyens de transfert d'une source audiovisuelle et des moyens de restitution d'un signal audio vérifie si un autre dispositif de restitution audio est présent. La vérification si un autre dispositif de restitution audio est présent est effectuée en vérifiant si l'adresse logique système audio AUDIOSYSTEM est disponible.

Si l'adresse logique AUDIOSYSTEM n'est pas disponible, le dispositif 10 comprenant des moyens de transfert d'une source audiovisuelle et des moyens de restitution d'un signal audio :
- désactive la fonctionnalité système audio ou
- active les moyens de restitution d'un signal audio uniquement pour restituer la composante audio décodée d'un signal audiovisuel délivré par le dispositif ou
- commande la génération d'un message à destination de l'utilisateur notifiant celui-ci d'une impossibilité d'utiliser les moyens de restitution d'un signal audio.

Dans l'affirmative, le dispositif 10 retourne à l'étape E43. Dans la négative, le dispositif 10 passe à l'étape E45. A l'étape E46, le dispositif 10 s'attribue l'adresse logique LA système audio AUDIOSYSTEM.

A l'étape E47, le dispositif 10 vérifie s'il y a une commutation du mode restitution audio vers le mode source audiovisuelle. Une commutation du mode restitution audio vers le mode source audiovisuelle apparaît lorsque l'utilisateur sélectionne comme source dans l'interface de la TV 15 le port HDMI relié au dispositif 10. Le téléviseur 15 transfère un message CEC de type < Set Stream Path > à destination du dispositif 10 ayant l'adresse physique 2.0.0.0, le dispositif 10 détermine alors qu'il doit devenir source audiovisuelle. Si la commutation vers le mode source audiovisuelle est confirmée, le dispositif 10 retourne à l'étape E41. Dans la négative, le dispositif 10 retourne à l'étape E47.

La Fig. 5 illustre schématiquement un second exemple de réalisation du procédé de gestion du mode de fonctionnement d'un dispositif comprenant des moyens de transfert d'une source audiovisuelle et des moyens de restitution d'un signal audio dans un système audiovisuel comprenant un téléviseur non adapté à gérer un dispositif comprenant des moyens de transfert d'une source audiovisuelle et des moyens de restitution d'un signal audio.

Comme cela a été précédemment mentionné en référence à la Fig. 1, le téléviseur 15 attribue à la source audiovisuelle 20 connectée sur le port HDMI 1 l'adresse physique 1.0.0.0 et attribue à l'étape E50 au dispositif 10 comprenant des moyens de transfert d'une source audiovisuelle et des moyens de restitution d'un signal audio connecté sur le port HDMI 2 l'adresse physique 2.0.0.0.

Selon le second exemple de réalisation, à l'étape E51, le dispositif 10 comprenant des moyens de transfert d'une source audiovisuelle et des moyens de restitution d'un signal audio s'attribue à l'intérieur de son propre espace d'adresse physique (2.x.x.x) une seconde adresse physique PA 2.1.0.0 comme s'il agissait alors en tant que répéteur selon la spécification HDMI.

A l'étape E52, le dispositif 10 comprenant des moyens de transfert d'une source audiovisuelle et des moyens de restitution d'un signal audio s'attribue la première adresse logique système de lecture disponible, par exemple l'adresse logique PLAYBACK2 pour l'adresse physique 2.1.0.0.

A l'étape E53, le dispositif 10 comprenant des moyens de transfert d'une source audiovisuelle et des moyens de restitution d'un signal audio vérifie si un autre dispositif de restitution audio est présent. La vérification si un autre dispositif de restitution audio est présent est effectuée en vérifiant si l'adresse logique système audio AUDIOSYSTEM est disponible.

Si l'adresse logique AUDIOSYSTEM n'est pas disponible, le dispositif 10 comprenant des moyens de transfert d'une source audiovisuelle et des moyens de restitution d'un signal audio passe à l'étape E54.

A l'étape E54, le dispositif 10 comprenant des moyens de transfert d'une source audiovisuelle et des moyens de restitution d'un signal audio :
- désactive la fonctionnalité système audio ou
- active les moyens de restitution d'un signal audio uniquement pour restituer la composante audio décodée d'un signal audiovisuel délivré par le dispositif ou
- commande la génération d'un message à destination de l'utilisateur notifiant celui-ci d'une impossibilité d'utiliser les moyens de restitution d'un signal audio.

Si l'adresse logique AUDIOSYSTEM est disponible, le dispositif 10 comprenant des moyens de transfert d'une source audiovisuelle et des moyens de restitution d'un signal audio passe à l'étape E55.

A l'étape E55, le dispositif 10 comprenant des moyens de transfert d'une source audiovisuelle et des moyens de restitution d'un signal audio s'attribue l'adresse logique système audio AUDIOSYSTEM pour l'adresse physique PA 2.0.0.0, comme décrit aux points 11.3.2 et 11.3. 3 de la spécification HDMI 2.0.

A l'étape E56, le dispositif 10 transfère uniquement la partie vidéo du signal audiovisuel et restitue localement par les moyens de restitution d'un signal audio 207 la composante audio décodée du signal audiovisuel.

## Revendications

1. Procédé de gestion du mode de fonctionnement d'un dispositif comprenant des moyens de transfert d'une source audiovisuelle et des moyens de restitution d'un signal audio, le dispositif étant relié à un téléviseur par l'intermédiaire d'une connexion de type interface multimédia haute définition HDMI, **caractérisé en ce que** le procédé comporte les étapes, effectuées par le dispositif, de :
- attribution (E300) d'une adresse logique source audiovisuelle,
- émission d'une requête comprenant l'adresse logique source audiovisuelle attribuée pour l'obtention (E301) de la version de la spécification HDMI du téléviseur,
- fonctionnement dans un mode de fonctionnement adapté si la version de la spécification HDMI implémentée par le téléviseur est inférieure à une version de la spécification HDMI 2.0 ;
et si le téléviseur répond au message de requête en indiquant une version égale ou postérieure à la version de la spécification HDMI 2.0 :
- attribution (E305) d'une adresse logique système audio,
- émission d'une deuxième requête comprenant l'adresse logique système audio attribuée pour l'obtention (E306) de la version de la spécification HDMI du téléviseur,
- attribution (E307) d'une adresse logique source audiovisuelle,
- émission d'une troisième requête comprenant l'adresse logique source audiovisuelle attribuée pour l'obtention (E308) de la version de la spécification HDMI du téléviseur,
- si le téléviseur a répondu à chacune des deuxième et troisième requêtes (E306, E308), déterminer que le téléviseur est apte à fonctionner conformément à la spécification HDMI 2.0 et entrer dans un mode de fonctionnement selon la spécification HDMI 2.0 ou plus,
- fonctionnement (E303) dans le mode de fonctionnement adapté, si le téléviseur n'a pas répondu à chacune des deuxième et troisième requêtes (E306, E308),
le fonctionnement adapté étant :
- soit un mode de fonctionnement dans lequel le dispositif s'attribue une adresse logique source audiovisuelle à la place d'une adresse logique système audio pour fonctionner dans le mode source audiovisuelle ou s'attribue une adresse logique système audio à la place d'une adresse logique source audiovisuelle pour fonctionner dans le mode source audio,
- soit un mode de fonctionnement dans lequel le téléviseur attribue une première adresse physique au dispositif et le dispositif s'attribue une seconde adresse physique.

2. Procédé selon la revendication 1, **caractérisé en ce que** l'attribution d'une adresse logique à la place d'une autre adresse logique est effectuée à la réception d'un message prédéterminé par la connexion HDMI.

3. Procédé selon la revendication 1 ou 2, **caractérisé en ce que** l'attribution de l'adresse logique système audio à la place de l'adresse source audiovisuelle est effectuée uniquement si aucun autre dispositif restitution audio n'est détecté.

4. Procédé selon l'une quelconque des revendications 1 à 3 **caractérisé en ce que**, lorsque le dispositif est dans le mode en source audiovisuelle, le dispositif transfère uniquement la partie vidéo du signal audiovisuel sur la connexion HDMI, et restitue par les moyens de restitution d'un signal audio la composante audio décodée du signal audiovisuel.

5. Dispositif de gestion du mode de fonctionnement d'un dispositif comprenant des moyens de transfert d'une source audiovisuelle et des moyens de restitution d'un signal audio, le dispositif étant relié à un téléviseur par l'intermédiaire d'une connexion de type interface multimédia haute définition HDMI, **caractérisé en ce que** le dispositif comporte :
- des moyens d'attribution d'une adresse logique source audiovisuelle,
- des moyens d'émission d'une requête comprenant l'adresse logique source audiovisuelle attribuée pour l'obtention (E301) de la version de la spécification HDMI du téléviseur,
- des moyens de fonctionnement dans un mode de fonctionnement adapté si la version de la spécification HDMI implémentée par le téléviseur est inférieure à une version de la spécification HDMI 2.0 ;
et si le téléviseur répond au message de requête en indiquant une version égale ou postérieure à la version de la spécification HDMI 2.0, activation :
- des moyens d'attribution (E305) d'une adresse logique système audio,
- des moyens d'émission d'une deuxième requête comprenant l'adresse logique système audio attribuée pour l'obtention (E306) de la version de la spécification HDMI du téléviseur,
- des moyens d'attribution (E307) d'une adresse logique source audiovisuelle,
- des moyens d'émission d'une troisième requête comprenant l'adresse logique source audiovisuelle attribuée pour l'obtention (E308) de la version de la spécification HDMI du téléviseur,
- des moyens de détermination que le téléviseur est apte à fonctionner conformément à la spécification HDMI 2.0 et d'entrer (E310) dans un mode de fonctionnement selon la spécification HDMI 2.0 ou plus si le téléviseur a répondu à chacune des deuxième et troisième requêtes (E306, E308),
- des moyens de fonctionnement (E303) dans le mode de fonctionnement adapté, si le téléviseur n'a pas répondu à chacune des deuxième et troisième requêtes (E306, E308),
le fonctionnement adapté étant :
- soit un mode de fonctionnement dans lequel le dispositif s'attribue une adresse logique source audiovisuelle à la place d'une adresse logique système audio pour fonctionner dans le mode source audiovisuelle ou s'attribue une adresse logique système audio à la place d'une adresse logique source audiovisuelle pour fonctionner dans le mode source audio,
- soit un mode de fonctionnement dans lequel le téléviseur attribue une première adresse physique au dispositif et le dispositif s'attribue une seconde adresse physique.

6. Un produit programme d'ordinateur **caractérisé en ce qu'**il comprend des instructions pour implémenter, par un dispositif noeud, le procédé selon l'une quelconque des revendications 1 à 4, lorsque ledit programme est exécuté par un processeur du dispositif noeud.

7. Un support de stockage **caractérisé en ce qu'**il stocke un programme d'ordinateur comprenant des instructions pour implémenter, par un dispositif noeud, le procédé selon l'une quelconque des revendications 1 à 4, lorsque ledit programme est exécuté par un processeur du dispositif noeud.

## Patentansprüche

1. Verfahren zur Verwaltung des Betriebsmodus einer Vorrichtung, die Mittel zur Übertragung einer audiovisuellen Quelle und Mittel zur Wiedergabe eines Audiosignals umfasst, wobei die Vorrichtung mittels einer Verbindung vom Typ High-Definition Multimedia Interface, HDMI, mit einem Fernsehgerät verbunden ist, **dadurch gekennzeichnet, dass** das Verfahren die folgenden von der Vorrichtung durchgeführten Schritte aufweist:
- Zuweisen (E300) einer logischen audiovisuellen Quellen-Adresse,
- Senden einer Anfrage, die die zugewiesene logische audiovisuelle Quellen-Adresse umfasst, zum Erhalt (E301) der Version der HDMI-Spezifikation des Fernsehgeräts,
- Betrieb in einem geeigneten Betriebsmodus, wenn die Version der HDMI-Spezifikation, die vom Fernsehgerät implementiert ist, niedriger als eine Version der Spezifikation HDMI 2.0 ist;
und wenn das Fernsehgerät auf die Anfragenachricht antwortet, indem es eine Version angibt, die gleich der Spezifikation HDMI 2.0 oder neuer als diese ist:
- Zuweisen (E305) einer logischen Audiosystemadresse,
- Senden einer zweiten Anfrage, die die zugewiesene logische Audiosystemadresse umfasst, zum Erhalt (E306) der Version der HDMI-Spezifikation des Fernsehgeräts,
- Zuweisen (E307) einer logischen audiovisuellen Quellen-Adresse,
- Senden einer dritten Anfrage, die die zugewiesene logische audiovisuelle Quellen-Adresse umfasst, zum Erhalt (E308) der Version der HDMI-Spezifikation des Fernsehgeräts,
- wenn das Fernsehgerät auf jede der zweiten und dritten Anfrage (E306, E308) geantwortet hat, Bestimmen, dass das Fernsehgerät geeignet ist, gemäß der Spezifikation HDMI 2.0 zu funktionieren, und Eintreten in einen Betriebsmodus gemäß der Spezifikation HDMI 2.0 oder höher,
- Betrieb (E303) in dem geeigneten Betriebsmodus, wenn das Fernsehgerät nicht auf jede der zweiten und dritten Anfrage (E306, E308) geantwortet hat,
wobei der geeignete Betrieb Folgendes ist:
- entweder ein Betriebsmodus, in dem sich die Vorrichtung eine logische audiovisuelle Quellen-Adresse anstelle einer logischen Audiosystemadresse zuweist, um im Modus audiovisuelle Quelle zu funktionieren, oder sich eine logische Audiosystemadresse anstelle einer logischen audiovisuellen Quellen-Adresse zuweist, um im Modus Audioquelle zu funktionieren,
- oder ein Betriebsmodus, in dem das Fernsehgerät eine erste physische Adresse der Vorrichtung zuweist und sich die Vorrichtung eine zweite physische Adresse zuweist.

2. Verfahren nach Anspruch 1, **dadurch gekennzeichnet, dass** die Zuweisung einer logischen Adresse anstelle einer anderen logischen Adresse beim Empfang einer vorbestimmten Nachricht durch die HDMI-Verbindung durchgeführt wird.

3. Verfahren nach Anspruch 1 oder 2, **dadurch gekennzeichnet, dass** die Zuweisung der logischen Audiosystemadresse anstelle der audiovisuellen Quellen-Adresse nur dann durchgeführt wird, wenn keine andere Audiowiedergabevorrichtung erkannt wird.

4. Verfahren nach einem der Ansprüche 1 bis 3, **dadurch gekennzeichnet, dass**, wenn sich die Vorrichtung im Modus audiovisuelle Quelle befindet, die Vorrichtung nur den Videoanteil des audiovisuellen Signals auf der HDMI-Verbindung überträgt und durch die Mittel zur Wiedergabe eines Audiosignals die decodierte Audiokomponente des audiovisuellen Signals wiedergibt.

5. Vorrichtung zur Verwaltung des Betriebsmodus einer Vorrichtung, die Mittel zur Übertragung einer audiovisuellen Quelle und Mittel zur Wiedergabe eines Audiosignals umfasst, wobei die Vorrichtung mittels einer Verbindung vom Typ High-Definition Multimedia Interface, HDMI, mit einem Fernsehgerät verbunden ist, **dadurch gekennzeichnet, dass** die Vorrichtung Folgendes aufweist:
- Mittel zum Zuweisen einer logischen audiovisuellen Quellen-Adresse,
- Mittel zum Senden einer Anfrage, die die zugewiesene logische audiovisuelle Quellen-Adresse umfasst, zum Erhalt (E301) der Version der HDMI-Spezifikation des Fernsehgeräts,
- Mittel zum Betrieb in einem geeigneten Betriebsmodus, wenn die Version der HDMI-Spezifikation, die vom Fernsehgerät implementiert ist, niedriger als eine Version der Spezifikation HDMI 2.0 ist;
und wenn das Fernsehgerät auf die Anfragenachricht antwortet, indem es eine Version angibt, die gleich der Spezifikation HDMI 2.0 oder neuer als diese ist, Aktivieren:
- der Mittel zum Zuweisen (E305) einer logischen Audiosystemadresse,
- der Mittel zum Senden einer zweiten Anfrage, die die zugewiesene logische Audiosystemadresse umfasst, zum Erhalt (E306) der Version der HDMI-Spezifikation des Fernsehgeräts,
- der Mittel zum Zuweisen (E307) einer logischen audiovisuellen Quellen-Adresse,
- der Mittel zum Senden einer dritten Anfrage, die die zugewiesene logische audiovisuelle Quellen-Adresse umfasst, zum Erhalt (E308) der Version der HDMI-Spezifikation des Fernsehgeräts,
- der Mittel zum Bestimmen, dass das Fernsehgerät geeignet ist, gemäß der Spezifikation HDMI 2.0 zu funktionieren, und zum Eintreten (E310) in einen Betriebsmodus gemäß der Spezifikation HDMI 2.0 oder höher, wenn das Fernsehgerät auf jede der zweiten und dritten Anfrage (E306, E308) geantwortet hat,
- der Mittel zum Betrieb (E303) in dem geeigneten Betriebsmodus, wenn das Fernsehgerät nicht auf jede der zweiten und dritten Anfrage (E306, E308) geantwortet hat,
wobei der geeignete Betrieb Folgendes ist:
- entweder ein Betriebsmodus, in dem sich die Vorrichtung eine logische audiovisuelle Quellen-Adresse anstelle einer logischen Audiosystemadresse zuweist, um im Modus audiovisuelle Quelle zu funktionieren, oder sich eine logische Audiosystemadresse anstelle einer logischen audiovisuellen Quellen-Adresse zuweist, um im Modus Audioquelle zu funktionieren,
- oder ein Betriebsmodus, in dem das Fernsehgerät eine erste physische Adresse der Vorrichtung zuweist und sich die Vorrichtung eine zweite physische Adresse zuweist.

6. Computerprogrammprodukt, **dadurch gekennzeichnet, dass** es Anweisungen umfasst, um durch eine Knotenvorrichtung das Verfahren nach einem der Ansprüche 1 bis 4 zu implementieren, wenn das Programm von einem Prozessor der Knotenvorrichtung ausgeführt wird.

7. Speichermedium, **dadurch gekennzeichnet, dass** ein Computerprogramm darauf gespeichert ist, das Anweisungen umfasst, um durch eine Knotenvorrichtung das Verfahren nach einem der Ansprüche 1 bis 4 zu implementieren, wenn das Programm von einem Prozessor der Knotenvorrichtung ausgeführt wird.

## Claims

1. Method for managing the operating mode of a device comprising means for transferring an audiovisual source and means for reproducing an audio signal, the device being connected to a television set by means of a connection of the high definition multimedia interface HDMI type, **characterised in that** the method comprises the steps, performed by the device, of:
- attributing (E300) an audiovisual source logic address,
- sending a request comprising the audiovisual source logic address attributed for obtaining (E301) the version of the HDMI specification of the television set,
- operating in an adapted operating mode if the version of the HDMI specification implemented by the television set is lower than a version of the HDMI 2.0 specification,
- and, if the television set responds to the request message by indicating a version equal to or subsequent to the version of the HDMI 2.0 specification:
- attributing (E305) an audio system logic address,
- sending a second request comprising the audio system logic address attributed for obtaining (E306) the version of the HDMI specification of the television set,
- attributing (E307) an audiovisual source logic address,
- sending a third request comprising the audiovisual source logic address attributed for obtaining (E308) the version of the HDMI specification of the television set,
- if the television set has responded to each of the second and third requests (E306, E308), determining that the television set is able to operate in accordance with the HDMI 2.0 specification and entering an operating mode in accordance with the HDMI 2.0 or higher specification,
- operating (E303) in the adapted operating mode if the television set has not responded to each of the second and third requests (E306, E308),
the adapted operation being:
- either an operating mode in which the device attributes to itself an audiovisual source logic address in place of an audio system logic address for operating in the audiovisual source mode or attributes to itself an audio system logic address in place of an audiovisual source logic address for operating in the audio source mode,
- or an operating mode in which the television set attributes a first physical address to the device and the device attributes to itself a second physical address.

2. Method according to claim 1, **characterised in that** the attribution of a logic address in place of another logic address is done on receiving a predetermined message through the HDMI connection.

3. Method according to claim 1 or 2, **characterised in that** the attribution of the audio system logic address in place of the audiovisual source address is implemented only if no other reproduction device is detected.

4. Method according to any one of claims 1 to 3, **characterised in that**, when the device is in the audiovisual source mode, the device transfers only the video part of the audiovisual signal over the HDMI connection, and reproduces, via the means for reproducing an audio signal, the decoded audio component of the audiovisual signal.

5. Device for managing the operating mode of a device comprising means for transferring an audiovisual source and means for reproducing an audio signal, the device being connected to a television set by means of a connection of the high definition multimedia interface HDMI type, **characterised in that** the device comprises:
- means for attributing an audiovisual source logic address,
- means for sending a request comprising the audiovisual source logic address attributed for obtaining (E301) the version of the HDMI specification of the television set,
- means for operating in an adapted operating mode if the version of the HDMI specification implemented by the television set is lower than a version of the HDMI 2.0 specification,
and if the television set responds to the request message by indicating a version equal to or subsequent to the version of the HDMI 2.0 specification, activating
- means for attributing (E305) and audio system logic address,
- means for sending a second request comprising the audio system logic address attributed for obtaining (E306) the version of the HDMI specification of the television set,
- means for attributing (E307) an audio system logic address,
- means for sending a third request comprising the audiovisual source logic address attributed for obtaining (E308) the version of the HDMI specification of the television set,
- means for determining that the television set is able to operate in accordance with the HDMI 2.0 specification and entering (E301) an operating mode in accordance with the HDMI 2.0 or higher specification if the television set has responded to each of the second and third requests (E306, E308),
- means for operating (E303) in the adapted operating mode if the television set has not responded to each of the second and third requests (E306, E308), the adapted operation being:
- either an operating mode in which the device attributes to itself an audiovisual source logic address in place of an audio system logic address for operating in the audiovisual source mode or attributes to itself an audio system logic address in place of an audiovisual source logic address for operating in the audio source mode,
- or an operating mode in which the television set attributes a first physical address to the device and the device attributes to itself a second physical address.

6. A computer program product **characterised in that** it comprises instructions for implementing, by a node device, the method according to any one of claims 1 to 4, when said program is executed by a processor of the node device.

7. A storage medium **characterised in that** it stores a computer program comprising instructions for implementing, by a node device, the method according to any one of claims 1 to 4, when said program is executed by a processor of the node device.
